# EUROPEAN PATENT SPECIFICATION

(11) **EP 4 644 101 B1**
(45) Date of publication and mention of the grant of the patent: **09.09.2026**
(21) Application number: 24185213.6
(22) Date of filing: 28.06.2024
(51) Int. Cl.: B29C 70/52, B29C 70/56

(54) **METHOD AND SYSTEM FOR MANUFACTURING A COMPOSITE BAR CONSISTING OF CARBON FIBRES AND A RESIN MATRIX**
VERFAHREN UND SYSTEM ZUR HERSTELLUNG EINES VERBUNDSTABES, DER AUS KOHLENSTOFFFASERN UND EINER HARZMATRIX BESTEHT
PROCÉDÉ ET SYSTÈME DE FABRICATION D'UN BARREAU COMPOSITE CONSTITUÉ DE FIBRES DE CARBONE ET D'UNE MATRICE DE RÉSINE

(30) Priority: 30.04.2024 PL 44846124
(43) Date of publication of application: 05.11.2025
(73) Proprietor: Akademia Gorniczo-Hutnicza im. Stanislawa Staszica w Krakowie, 30-059 Krakow (PL)
(72) Inventor: GUBERNAT, Maciej, Kraków (PL); SZATKOWSKI, Piotr, Kraków (PL); SZATKOWSKA, Martyna, Kraków (PL); WIELOWSKI, Ryszard, Kraków (PL)
(74) Representative: Wlasienko, Jozef

(56) References cited:
- CN-A- 116 925 531
- JP-A- H06 190 930

## Description

### Field of invention

The present invention relates generally to the field of composite materials manufacturing. More particularly, it relates to a method of manufacturing a composite bar consisting of carbon fibres and a resin matrix, and to a system for manufacturing such a composite bar using which the method of the invention is carried out.

### State of the art

Composite materials are materials composed of at least two phases. The properties of these materials are usually not the sum of the properties of the phases that compose them. Composite materials that have a polymer matrix and are reinforced with fibres due to their low density and very good mechanical properties have great development potential and have determined the development of many industries for many years. For example, they are known to be used in the production of wind turbine blades, fuselages and wings of passenger planes, frames of high-performance bicycles and many other elements.

A special example of composite materials is those which are manufactured using phenol-formaldehyde resins. The diverse usefulness of the phenol-formaldehyde resins is caused by the wide possibilities of shaping their properties at the stage of their synthesis, easy availability and low price. They are offered by manufacturers in a solid or a liquid form. They are characterized by a wide range of viscosities, have different stability, and can be thermosetting or chemosetting.¹

Pultrusion is one of the basic industrial techniques for manufacturing composite materials reinforced with fibres, which have a proportion of the fibres up to 60-70% by volume. Pultrusion is characterized by high efficiency, and elements obtained with its use are very competitive in price compared to elements produced using other techniques. The market of products obtained by the pultrusion method is very broad and diverse, and these products can have various properties desired in the sport, construction, transport, energy, aviation, space industries and others. The universality of this technique means that it can be used to obtain longitudinal elements such as bars, cables, plates, tapes, pipes or profiles having various cross-sectional shapes. Products can be obtained using various fibres, such as glass, aramid, basalt, carbon and others. Matrix precursors are both thermoplastic and thermosetting polymers. The minimum requirements for composite products reinforced with fibres and having a polymer matrix are specified in the international standard CEN-EN 13706², and additional guidance can be found in the literature ³.

The basic steps of the pultrusion process according to specialist literature are the following steps: step (I) of parallelly arranging bundles of fibres by passing them through a system of guides, step (II) of impregnation with a liquid polymer, which includes immersing the guided fibres in a bath with the polymer and then removing an excess of the polymer by passing the fibres through a system of squeezing rollers, step (III) of cross-linking, in which the final shape of the cross-section is obtained, and its fixation is achieved, usually by passing the polymer-impregnated fibres through a multi-zone mould heated to appropriate temperatures, so that the produced material takes the shape of the mould, step (IV) of cutting the fixed product exiting a nozzle into sections of the desired length. In addition to these basic steps, various modifications are currently used on pultrusion lines (e.g. a step of thermal removal of polymer surface preparation from fibres), which serve to modify an interphase connection, thus adapting the obtained polymer composites for further processing into carbon-carbon composites. These modifications partially determine the final course of the basic steps (I-IV) of the pultrusion technique but do not cause any of them to be omitted. The simplicity of the basic assumptions of the pultrusion process may give a false impression that setting up the production process is easy. Analyzing and understanding the process requires taking into account many factors including the viscosity of a polymer, polymer flow dynamics, the amount of fibres fed per cross-sectional area of a cross-linking mould, fibre wettability with a polymer, heat transfer, the nature of phase changes, a temperature of the cross-linking process, the speed of pulling fibres, fibre tension force, and many others, which introduce many variables into the process, determining its efficiency. Currently, numerical methods are often used in the optimization of the pultrusion process ⁴.

One of the most important, but also complicated steps of the pultrusion method for manufacturing a composite material is step (III) of cross-linking. Cross-linking mechanisms depend on the type of polymer used, e.g. an epoxy resin, a polyester resin, a phenolic resin, an acrylic resin or others. The choice of the specific type of resin depends mainly on the requirements that the final product must meet. The choice of the type of resin has a significant impact on the course of the pultrusion process since each of the resins is characterized by a different susceptibility to shrinkage, a different viscosity or a different reactivity during the cross-linking process. Therefore, temperature conditions and the speed of pultrusion depend on both the cross-sectional shape of a product and the selected resin system. The cross-linking process is exothermic and leads to a change of the physical state of a resin from a liquid to a solid, wherein in the intermediate stage the resin becomes a gel. As a result of chemical changes resulting from the cross-linking process, the viscosity, the density and the modulus of elasticity increase. Resins used in the pultrusion process must be crosslinked within a short time, which is a challenge in the context of phenol-formaldehyde resins. Technological improvements are sought in the form of various heating methods to accelerate this process, such as radio-frequency curing ^{5,6} or microwave curing ⁷. However, accelerating this process can result in undesirable effects in the form of swelling, deformation or deterioration of the properties of the resulting materials.

The cross-linking process is usually carried out in heated moulds no longer than 2 m. The length of the mould depends largely on the speed used on a given line. The course of cross-linking of a resin during the pultrusion process using the mould is one of the greatest challenges of the pultrusion process. It is expected that the maximum temperature peak should be located at the point where a material exits the mould, which reduces the risk of potential thermal degradation of the resin resulting from its extended residence time at an elevated temperature. Experimentally, this can be achieved by regulating the temperature of heaters and the speed of material feed in the mould. The initial viscosity of the material near the inlet to the mould decreases, which is caused by the increase in temperature. However, the viscosity increases quickly during the further linear increase in temperature, to approach infinity in the final phase. This is caused by the effect of forming chemical bonds in the resin, which cause the formation of a branched structure of a polymer. The speed of cross-linking of the resin is the highest near the peak temperature of the mould. The time of the cross-linking process is very short, i.e. in the range of several dozen seconds. This makes the pultrusion method a very competitive method for the rapid production of composite materials, with efficiencies unattainable for example for infusion methods. However, such high dynamics of the cross-linking process may cause difficulties with the cross-linking of the central areas of the formed material. ⁸

To obtain a precise cross-sectional shape of a product, the geometry of a cross-linking mould must be made very precisely. Nevertheless, there is a risk of deformation of the mould during the process, which is influenced by pressure forces and temperature factors. As a result, a material may jam in the mould due to the non-uniform geometry of a matrix resulting from the cross-linking process, the individual stages of which affect individual zones of the mould differently. This can increase tension force and friction resistance. In addition to the non-linearity of the geometry of the mould, shear stresses arise at the contact of inner surfaces of the mould and the product. These shear stresses result from the physical changes of a matrix material which are caused by the cross-linking process. This effect lasts from the start of gelation until the product is separated from the mould surface due to its shrinkage. The effect of shear stresses is significant for the surface areas of the product and can cause their deformation. The phenomenon of increased shear stresses together with possible deformation of the mould may, in extreme cases, lead to entrapment of the product and shut-down of the production line. ^{8,9} The risk is relatively high due to the limited possibility of controlling the temperature inside the mould, taking into account the exothermicity of the cross-linking reaction. The temperature of a composite material being formed may, in certain zones of the mould, exceed the temperature of heating elements of the mould, which may lead to overheating of the material and increase the risk of its entrapment. To prevent these effects, lubricating additives are added to thermosetting resins used in the composite pultrusion processes. ¹⁰ However, this additive may adversely affect the properties of the final product and may also be unacceptable if the product is to be a precursor for obtaining high-purity carbon-carbon composite materials. Especially in the latter case, other methods should be sought to avoid the need for using non-carbon additives to precursors of a composite matrix. Lubricating additives can also accumulate on the surface of the product and deteriorate the bond between a reinforcement bar and a carbon matrix in carbon-carbon composites made from them. The problem becomes more important in the case of manufacturing small products having a small cross-sectional area, such as reinforcement bars for the production of multidirectional carbon-carbon composites. In this case, the pultruded product has a small diameter (1-3 mm), and the surface area to volume ratio of such a product is high. It is therefore expected that an excess of the additive will be present on the surface of these products, which makes their further use in the multidirectional carbon-carbon composites difficult or completely impossible.

Most of the solutions developed so far focus on methods of modifying heated moulds for cross-linking as one of the most important zones of the standard pultrusion line to improve the forming process and the curing process or partially eliminate the disadvantages of the classic moulds.

For example, patent application CN114986944A describes a modification of a heated mould having a specific structure enabling easier work, for the pultrusion of composite bars.

Patent application CN217704801U discloses a heated mould for the pultrusion of a composite material. The mould consists of a main body and many bodies for extruding. The bodies for extruding are equipped with a heating unit supporting the infiltration of fibres with a liquid resin flowing through the grooves of the mould. The developed mould allows to avoid the flow of the resin from the product before it is cured, thanks to which the required precise dimension is maintained, which is important for small cross-sections of pultruded products and facilitates this process.

Patent application WO2021192564A1 describes a modification of a heated mould. This modification improves the circulation of a liquid resin due to the use of developed grooves having a triangular cross-sectional shape. The mould is dedicated to the production of a sandwiched-type composite by the pultrusion method.

Patent application JPH02182437A describes a modification of a heated mould. This modification makes it possible to effectively degas a composite material being produced from fibrous reinforcement and a phenolic resin during curing, which is difficult in normal conditions due to the high proportion of the reinforcement blocking the paths for evacuating gaseous by-products of the cross-linking process of the phenolic resin to the outside.

Patent application JPH04115931A describes a method of pultrusion of a composite material being produced from fibrous reinforcement and a phenolic resin by using a series of heated moulds and an initial rough moulding. Subsequent moulds have a decreasingly smaller cross-sectional area until the target size and full curing are achieved.

Patent application JPS62256633A describes an improvement of the straightness and strength of a pultruded bar reinforced with carbon fibres.

JPH06190930A describes a pultrusion-moulding of FRP resin moulded-product which includes impregnating phenol resin into reinforcing fibres, pulling the obtained material out of die and curing the resin in a second die at higher temp of 50-80 deg C.

Patent application CN202736589U describes a device for automatically preventing bundles of fibres from twisting on a pultrusion line.

Only single patent specifications describe methods of pultrusion of composite bars, the aim of which is to eliminate expensive and technologically problematic heated moulds. However, these descriptions are usually very general. An exception is patent PL/EP 3544796, in which the proposed solution is described in detail, but is technologically complex. In patent PL/EP 3544796 attention was drawn to the fact that most of the solutions require the use of forming nozzles, and a method of manufacturing composite bars for reinforcement of concrete was proposed. The bars consist of reinforcement fibres and a thermosetting resin. In said method, the curing on the surface of the bar is carried out in a short time using a radiation source, which, as the authors argue, should lead to maintaining the cross-sectional shape, increasing the proportion of the reinforcement fibres and reducing the emission of gaseous by-products of the cross-linking process into the atmosphere. Specifically, patent PL/EP 3544796 describes the method of manufacturing the reinforcement bar and a modified pultrusion system comprising a source of the fibres, a zone for assembling the fibres into a bundle, a zone for impregnating the bundle with the thermosetting resin, a zone for removing an excess of the resin from the bundle of the fibres, a zone for compressing the bundle in a radial manner, a zone for exposing the bundle to a source of radiation energy, a zone for spraying particles onto the bundle, a zone for exposing the bundle to a radiation initiating polymerization of the resin on its surface. This solution requires the use of several heating zones equipped with different heat sources, the control of which requires high precision. Moreover, as indicated in the literature, the proposed rapid initial curing of the surface of a bar leads to the formation of a non-uniform distribution of stiffness modules on the bar cross-section, which contributes to the formation of internal stresses in the product. These internal stresses may contribute to the deformation of the product or the formation of cracks weakening the product. Moreover, the proposed accelerated cross-linking of the surface layers of the bar significantly, as suggested by the authors of patent PL/EP 3544796, contributes to the creation of a barrier to the release of gaseous products of the cross-linking process, however, it does not inhibit the formation of the gaseous products, and their accumulation in the product volume may also lead to the formation of unfavourable internal stresses, porosity, swelling, cracking or deterioration of the product properties.

### Summary of the invention

### Technical problem

As described above, the disadvantage of the previously used solutions of the pultrusion process for manufacturing composite bars is the complex problem of the cross-linking of resins in heated moulds. This problem is manifested, among others, by the frequent adhesion of the resins to heated surfaces of elements for moulding and cross-linking. Therefore, lubricating additives must be added to the resins, which may deteriorate the properties of the produced composite materials and contaminate the composite materials with non-carbon elements.

In the prior art, there is no comprehensive description of the pultrusion method for manufacturing composite bars consisting of carbon fibres and a phenol-formaldehyde resin, in which the crosslinking process could be carried out freely without a heated mould.

In connection with the above, the problem to be solved was to develop a simple method of manufacturing composite bars consisting of continuous carbon fibres and a resin by the pultrusion process without the necessity of using the heated moulds described in the literature and without the necessity of adding lubricating or photoinitiating additives to the resin, i.e. the method which makes it possible to manufacture the bars free of undesirable chemical impurities, which can be further thermally processed by pyrolysis to form high-temperature carbon-carbon composites.

### Solution to the problem

The problem set out above is solved by providing a method of manufacturing a composite bar consisting of carbon fibres and a resin matrix, having the features according to claim 1 and by providing a system for manufacturing a composite bar consisting of carbon fibres and a resin matrix, having the features according to claim 9.

Preferred embodiments of the method according to the invention are defined in dependent claims 2 to 8, and preferred embodiments of the system according to the invention are defined in dependent claims 10 to 16.

The invention relates to a method of manufacturing a composite bar consisting of carbon fibres and a resin matrix, wherein said method comprises pulling at least one bundle of the carbon fibres with a force in the range of 40 to 1200 N, during which at least one bundle of the carbon fibres is subjected to a treatment comprising the following steps:
(a) exposing to a temperature in the range of 400°C to 800°C in an inert gas atmosphere;
(b) cooling to a temperature in the range of 10°C to 50°C;
(c) impregnating with a thermosetting resin having a crosslinking temperature in the range of 120°C to 250°C and a viscosity in the range of 500 mPa·s to 3500 mPa·s;
(d) removing an excess of the resin;
(e) forming into the shape of the bar having a diameter in the range of 1 mm to 15 mm at an ambient temperature in the range of 10°C to 50°C;
(f) exposing to a temperature in the range of 100°C to 150°C by pulling at least one resin-impregnated bundle of the carbon fibres in the shape of the bar through a heating zone with air blowing or a heating chamber, each having a length in the range of 100 mm to 1000 mm; and
(g) exposing to a temperature in the range of 150°C to 250°C by pulling at least one resin-impregnated bundle of the carbon fibres in the shape of the bar through a heating zone with air blowing or a heating chamber, each having a length in the range of 1000 mm to 5000 mm.

Preferably, in the method according to the invention one bundle of the carbon fibres is used, which has a linear density in the range of 400 to 40,000 TEX. Also preferably, in the method according to the invention more bundles of the carbon fibres, more preferably 2 to 20 bundles of the carbon fibres, which have a total linear density in the range of 400 to 40,000 TEX, are used. They are supplied from separate spools. Each of the bundles of the carbon fibres independently contains 6,000 to 24,000 carbon fibres.

Preferably, the pulling of at least one bundle of the carbon fibres is carried out using a winch placed after the last step, wherein the winch is selected from a roller winch, a belt winch or a crawler winch.

Preferably, step (a) is carried out by pulling at least one bundle of the carbon fibres through a tunnel furnace for continuous operation, in which the temperature in the range of 400°C to 800°C is maintained over a section of a length in the range of 250 mm to 1000 mm.

Preferably, step (b) is carried out in the air.

Preferably, step (c) is carried out by pulling at least one bundle of the carbon fibres through an impregnation tank containing the thermosetting resin at a temperature in the range of 10°C to 40°C to form at least one resin-impregnated bundle of the carbon fibres.

Preferably, in step (c) the thermosetting resin is selected from a group comprising a phenolic resin, a phenol-formaldehyde resin, a furfuryl resin and a mixture thereof.

Preferably, step (d) is carried out by pulling at least one resin-impregnated bundle of the carbon fibres through a set of 2 to 6 rollers arranged non-linearly with respect to the rectilinear path of at least one bundle of the carbon fibres.

Preferably, step (e) is carried out by pulling at least one resin-impregnated bundle of the carbon fibres through a nozzle having a tapered inner diameter, wherein the inner diameter of the nozzle at the entrance is in the range of 50 mm to 100 mm and at the exit is in the range of 1 mm to 15 mm, and a length of the nozzle is in the range of 10 mm to 100 mm.

Furthermore, the invention relates to a system for manufacturing a composite bar consisting of carbon fibres and a resin matrix, wherein the system comprises the following elements:
- a source 1 of at least one bundle of the carbon fibres;
- an element 2 for centring at least one bundle of the carbon fibres;
- a tunnel furnace 3 for continuous operation, adapted to operate at a temperature in the range of 400°C to 800°C and equipped with an inlet and an outlet for an inert gas;
- a cooling zone 4;
- an element 5 for impregnating at least one bundle of the carbon fibres with a resin;
- an element 6 for removing an excess of the resin from at least one resin-impregnated bundle of the carbon fibres;
- an element 7 for forming at least one bundle of the carbon fibres into the shape of the bar;
- a heating zone 8 having a temperature in the range of 100°C to 150°C, which is a heating zone with air blowing or a heating chamber, the lengths of which are in the range of 100 mm to 1000 mm;
- a heating zone 9 having a temperature in the range of 150°C to 250°C, which is a heating zone with air blowing or a heating chamber, the lengths of which are in the range of 1000 mm to 5000 mm; and
- a winch 10.

Preferably, the source 1 of at least one bundle of the carbon fibres is at least one spool of the carbon fibres, more preferably 2 to 20 spools of the carbon fibres.

Preferably, the element 2 for centring at least one bundle of the carbon fibres is located at a distance of 500 mm to 3000 mm from the source 1 of at least one bundle of the carbon fibres.

Preferably, the tunnel furnace 3 for continuous operation has an internal diameter in the range of 20 mm to 200 mm and a length in the range of 500 mm to 5000 mm, wherein the temperature in the range of 400°C to 800°C occurs over a section of the furnace in the range of 250 mm to 1000 mm.

Preferably, the cooling zone 4 is a section having a length in the range of 200 mm to 1500 mm located in the air.

Preferably the element 5 for impregnating at least one bundle of the carbon fibres with the resin is an impregnation tank having a length in the range of 100 mm to 500 mm, a width in the range of 200 mm to 1000 mm and a depth in the range of 50 mm to 400 mm.

Preferably, the element 5 for impregnating at least one bundle of the carbon fibres with the resin comprises a set of at least two rollers for guiding at least one bundle of the carbon fibres, wherein the rollers have diameters in the range of 10 mm to 60 mm and are arranged non-linearly in relation to the shortest rectilinear path of at least one bundle of the carbon fibres from the source to the winch.

Preferably, the element 6 for removing the excess of the resin comprises a set of 2 to 6 rollers having diameters in the range of 2 mm to 60 mm, wherein the rollers are arranged non-linearly with respect to the shortest rectilinear path of at least one bundle of the carbon fibres from the source to the winch.

Preferably, an arrangement of the rollers in the element 5 for impregnating at least one bundle of the carbon fibres with the resin and the rollers in the element 6 for removing the excess of the resin is such that the generated resistance gives a tensile force applied to at least one bundle of the carbon fibres in the range of 40 N to 1200 N.

Preferably, the element 7 for forming at least one bundle of the carbon fibres into the shape of the bar is a nozzle having a tapered inner diameter, wherein the inner diameter of the nozzle at the entrance is in the range of 50 mm to 100 mm and at the exit is in the range of 1 mm to 15 mm, and a length of the nozzle is in the range of 10 mm to 100 mm.

Preferably, the winch 10 is a roller, belt or crawler winch.

### Preferred effects of the invention

The method according to the invention makes it possible to manufacture composite bars without the necessity of using heated moulds described in the literature, which are usually used in the pultrusion method for forming and curing composite materials. By eliminating the necessity of using the complicated heated moulds, the inventors of the present invention have simplified the technology of manufacture of composite bars having diameters of 1-15 mm by the pultrusion technique and have eliminated the common problems associated with the use of the heated moulds, such as the risk of product deformation due to the mould deformation, increased friction during pulling the product through the mould, the risk of formation of excessive shear stresses between the surface of the product and the surface of the heated mould, the risk of shut-down of a production line due to blocking the product in the mould, etc. The method according to the invention uses a free crosslinking process, during which a bar formed in a cold nozzle and suitably tensioned is pulled through a gelling zone and a crosslinking zone, in which a resin is effectively cured. In connection with the above, the advantage of the proposed solution is a significant simplification of the method of manufacturing bars on a pultrusion line, which reduces the required initial investment in starting the process by limiting the number of necessary simulation and experimental procedures. Thus, the method according to the invention is more economical and reliable and provides greater control over the pultrusion process.

In addition, by eliminating the necessity of using heated moulds, the inventors have also eliminated the necessity of adding lubricating additives to a resin. These additives are necessary when using the heated moulds. The use of the resin without the lubricating additives eliminates the problem of the presence of non-carbon elements in a composite carbon material. These non-carbon elements can contribute to the degradation of the structure of the carbon material and its premature failure during high-temperature processing or operation at a high temperature. Not using the lubricating additives added to the resin also eliminates the risk of their negative impact on the structure and properties of carbon fibres. Some elements can diffuse into the structure of the carbon fibres at high temperatures, leading to disruption of the structure and destruction of a reinforcement phase of a composite. In addition, the use of free curing without the lubricating additives significantly increases the purity of a resin matrix and the surface of the product, which makes it possible to use the product as a semi-finished product for obtaining multidirectional carbon-carbon composites. The elimination of the presence of the lubricating additives in the resin, which diffuse during the pultrusion process to the surface of the obtained bar, also prevents subsequent problems with chemical incompatibility of the surface of the reinforcement bars with the matrix material of the carbon-carbon composite. Such incompatibility usually leads to a weakening of an interphase bond and a deterioration of the mechanical properties of the material already at room temperature.

In this regard, the method of the invention makes it possible to manufacture lightweight, high-strength composite bars consisting of continuous carbon fibres and a resin. The bars meet the requirements of high purity and the content of elemental carbon, and they are free of non-carbon additives originating from lubricants. The produced bars are an economically competitive finished carbon-polymer product and meet the quality requirements for use as a semi-finished product for obtaining high-temperature carbon-carbon composites.

All the above-mentioned advantages were obtained by an appropriate selection of a resin system and technological process parameters, such as an amount of carbon fibres, a modification of the surface of the carbon fibres, a speed of the process, tension force, a temperature of a gelling zone and a cross-linking zone, inter-zone distances, lengths of individual zones, an arrangement of rollers in an impregnation tank, a shape of a nozzle forming a cross-section of bars and a geometry of a furnace for cross-linking the product in free conditions.

### Brief description of the figures

- Fig. 1: Schematic diagram of a system according to the invention for manufacturing a composite bar consisting of carbon fibres and a resin matrix.
- Fig. 2: Schematic diagram of an impregnation tank used in examples 1 and 2.

### Detailed description of the invention

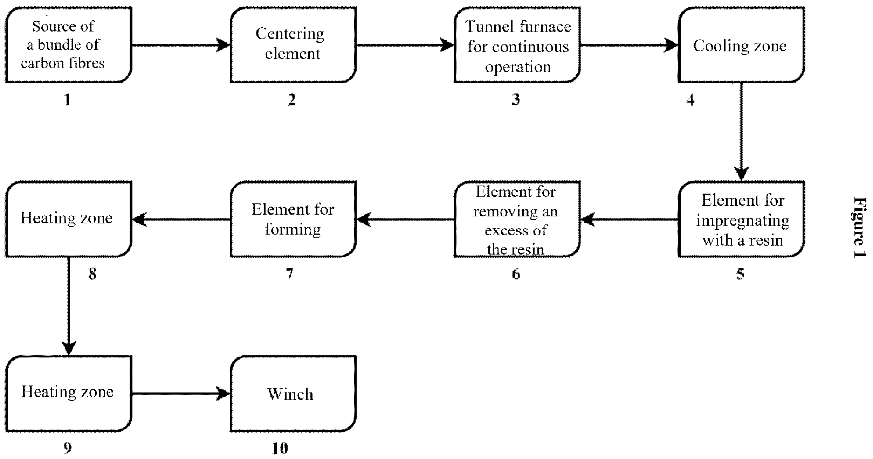

A method of manufacturing a composite bar consisting of carbon fibres and a resin matrix according to the invention comprises pulling at least one bundle of the carbon fibres with a force in the range of 40 to 1200 N, preferably in the range of 40 to 250 N, through a modified pultrusion system according to the invention, which is shown schematically in Figure 1. In the subsequent elements of the system, the bundle is subjected to the processing steps defined below.

The selection of a specific tension force value from the above-indicated range depends on a linear density of the bundle pulled through the system. The higher linear density of the bundle requires the higher tension force to prevent the bundle being formed from sagging under its own weight.

A source 1 of the bundle of the carbon fibres is a spool from which the bundle of the carbon fibres is unwound by a winch 10 arranged at the end of the system. Depending on the linear density of the used bundle of the carbon fibres, one or two or more spools are used, preferably 2 to 20, from which the bundles are unwound independently. Namely, one spool of the bundle having the required linear density can be used or more spools of the bundles having the required total linear density can be used. The linear density of the bundle pulled through the system or the total linear density of the bundles pulled through the system is in the range from 400 to 40,000 TEX, preferably in the range from 1600 to 10,000 TEX, depending on a diameter of the bar to be produced.

Each of the bundles of the carbon fibres independently contains between 6,000 and 24,000 carbon fibres.

In the following description, the term "bundle of carbon fibres" includes one bundle of the carbon fibres and two or more bundles of the carbon fibres, as the case may be, as indicated above.

A roller, belt or crawler winch is used to unwind and pull the bundle of the carbon fibres through the system. The unwinding direction must be perpendicular to the main axis of rotation of the spool/spools to avoid individual and mutual twisting of the bundle/bundles of the carbon fibres. The bundle of the carbon fibres is unwinded at a speed in the range of 0.1 to 10 metres/minute, preferably in the range of 0.3 to 1 metre/minute.

After unwinding from the spool, the bundle of the carbon fibres is pulled through a centring element 2 having an internal diameter in the range of 5 to 100 mm to pre-orient the bundle and guide it to a choke of a tunnel furnace, preventing its damage. The centring element 2 is located at a distance in the range of 500 mm to 3000 mm from the source of the bundle of the carbon fibres, depending on the number of bundles of the carbon fibres used and the availability of space on a production hall.

The bundle of the carbon fibres after passing through the centring element 2 is pulled through a tunnel furnace 3 for continuous operation, which is usually a tube furnace. This furnace is adapted to operate at temperatures in the range of 400°C to 800°C. The bundle pulled through this furnace is exposed to a temperature in the above-mentioned range in an inert gas atmosphere. In connection with this, this furnace is equipped with an independent inlet and outlet for the inert gas which may be nitrogen or argon. Chokes with a constriction are installed at the entrance to the furnace and at the exit from the furnace. The internal diameter of the chokes is at the narrowest point in the range of 1.5 mm to 20 mm. These chokes ensure that the inert atmosphere is maintained in the furnace. The furnace has an internal diameter in the range of 20 mm to 200 mm and a length in the range of 500 mm to 5000 mm. The temperatures ranging from 400°C to 800°C occur on a section of the furnace, having a length in the range of 250 mm to 1000 mm. The dimensions of the furnace depend on the size of a cross-section of the bar to be obtained. In short, the larger the cross-section of the bar, the larger the furnace. Ceramic insulating plugs are installed at the end and the beginning of the hot zone having the above-indicated temperature. The purpose of the exposure of the bundle to temperatures in the range of 400°C to 800°C is to modify its surface.

The next step of processing is a cooling of the bundle of the carbon fibres by pulling it through a cooling zone 4. The bundle is cooled to a temperature in the range of 10°C to 50°C, depending on the temperature of the environment. The cooling zone is a section having a length in the range of 200 mm to 1500 mm and located in the air.

After cooling, the bundle of the carbon fibres is impregnated with a resin. A thermosetting resin having a crosslinking temperature in the range from 120°C to 250°C and a viscosity in the range from 500 mPa·s to 3500 mPa·s is used as the resin. Preferably, the resin is selected from a group comprising a phenolic resin, a phenol-formaldehyde resin, a furfuryl resin or a mixture thereof. The temperature of the resin in the impregnation step is in the range of 10°C to 40°C.

An element 5 for impregnating the bundle of the carbon fibres with the resin is preferably an impregnation tank having a length in the range of 100 mm to 500 mm, a width in the range of 200 mm to 1000 mm and a depth in the range of 50 mm to 400 mm. The tank's parameters affect the amount of the resin and the period in which the process can be carried out without replenishing the resin. The length is selected to enable effective impregnation of the bundle of the carbon fibres with the resin and effective removal of an excess of the resin, which flows back into the tank. The width, on the other hand, depends on the number of bundles that can be pulled simultaneously. The more the bundles, the wider the tank must be. In the embodiment, an insertion comb is mounted at the entrance to the impregnation tank. When using 1 to 3 bundles of the carbon fibres, they can be introduced into the tank through one common opening of the comb. In contrast, when using a larger number of bundles of the carbon fibres, they are most often divided into groups introduced through different openings of the comb.

At least two rollers, preferably four, are mounted in the tank to guide the bundle of the carbon fibres. Preferably, the rollers have the same diameters being in the range of 10 mm to 60 mm. The rollers are arranged non-linearly with respect to the shortest rectilinear path of the bundle of the carbon fibres from the source to the winch. The arrangement of the rollers must be such as to immerse the bundle of the carbon fibres in the resin.

The resin-impregnated bundle of the carbon fibres is then pulled through an element 6 for removing an excess of the resin. The element 6 for removing the excess of the resin includes 2 to 6 rollers having diameters in the range of 2 mm to 60 mm. Preferably, the rollers have the same diameters. The rollers are arranged non-linearly with respect to the shortest rectilinear path of the bundle of the carbon fibres from the source to the winch and are located at a distance in the range of 100 mm to 1000 mm from the impregnation tank. Preferably, the rollers are grouped into sets of two rollers. Each set includes an upper roller and a lower roller. In one embodiment, the centres of cross-sections of the rollers in the set are offset from each other horizontally and vertically, with the lower roller being located closer to the tank and the upper roller being located closer to a nozzle for forming the bar.

The arrangement of the rollers in the element 5 for impregnating the bundle of the carbon fibres with the resin (preferably in the impregnation tank) and the rollers in the element 6 for removing the excess of the resin must be such as to generate a resistance giving a tension force applied to the bundle of the carbon fibres in the range of 40 N to 1200 N. The resistance and thus the tension force is adjusted by changing distances and angles between the rollers in the impregnation tank and in the element for removing the excess of the resin, taking into account, for example, factors such as the number of bundles of the carbon fibres, friction on other elements of the system and resistance resulting from unwinding the bundles of the carbon fibres from several spools.

After removing the excess of the resin, the bundle of the carbon fibres is pulled through an element 7 for forming the bundle of the carbon fibres into the shape of the bar. Such an element is preferably a nozzle having a tapered internal diameter, wherein the internal diameter of the nozzle at the entrance to the nozzle is in the range of 50 mm to 100 mm and at the exit from the nozzle is in the range of 1 mm to 15 mm, and the length of the nozzle is in the range of 10 mm to 100 mm. The decrease in the internal diameter of the nozzle is a maximum of 1.5 mm in diameter per 1 mm of the nozzle length. The formation of the bundle of the carbon fibres takes place at ambient temperature, i.e. in the range of 10°C to 50°C, depending on the prevailing conditions. The nozzle is located at a distance in the range of 100 to 1000 mm from the last set of the rollers of the element 6 for removing the excess of the resin. After passing through the nozzle, the bundle of the carbon fibres has the shape of the bar having a diameter in the range of 1 mm to 15 mm.

The resin-impregnated bundle of the carbon fibres, after removing the excess of the resin and being formed into the shape of the bar, is then pulled through a heating zone 8, in which the bundle is exposed to a temperature in the range of 100°C to 150°C. The heating zone having the above-indicated temperature is a zone with air blowing or a heating chamber. The length of this heating zone is in the range of 100 mm to 1000 mm. During this step, the resin is gelled and degassed. Accordingly, the temperature of this heating zone is the temperature at which the used resin is gelled, and the length of the heating zone is adjusted to obtain the gelled resin.

The bundle is then pulled through another heating zone 9, in which it is exposed to a temperature in the range of 150°C to 250°C. The heating zone having the temperature indicated above is also a zone with air blowing or a heating chamber. The length of this heating zone is in the range of 1000 mm to 5000 mm. In this step, the resin is cured. Accordingly, the temperature of this heating zone is the temperature at which the used resin is cured, and the length of the heating zone is adjusted to obtain the cured resin.

Finally, the composite bar consisting of the carbon fibres and the cured resin can be cut into the desired lengths or wound onto a spool.

### Examples

In all of the examples below, the phenol-formaldehyde resin was used, which according to the manufacturer has the viscosity at room temperature in the range of 1700 to 2100 mPas. Moreover, according to measurements carried out using differential scanning calorimetry (DSC), the resin gels in the temperature range of 92°C to 149°C and cures (crosslinks) in the temperature range of 149°C to 186°C when heated at the rate of 5°C/min.

### Example 1

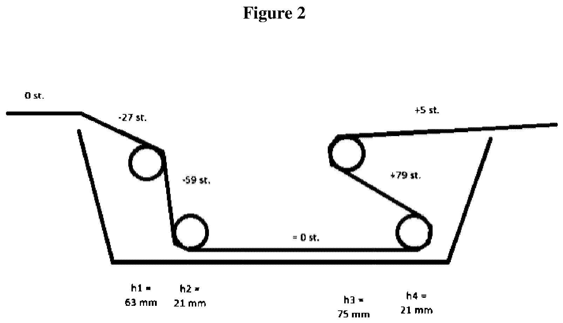

Three bundles of carbon fibres, each of which has 24,000 fibres (830 TEX each), are unwound with the force of 50 N using a multi-roller winch mounted at the end of the entire pultrusion system so that the unwinding direction is perpendicular to the main axis of rotation of spools without causing their individual and mutual twisting. The unwound bundles are pulled through a centring element having the internal diameter of 30 mm, located 1,000 mm from the spools and positioned at the height at which the bundles of the carbon fibres are pulled through a tube furnace. Then the bundles are pulled through a quartz choke with a constriction, having the internal diameter of 8 mm, mounted at the entrance to the tube furnace and maintaining an inert atmosphere inside the furnace. Nitrogen is used as the inert gas supplied to the furnace through an independent inlet and discharged from the furnace through an independent outlet. A gas-collecting scrubber is mounted behind the outlet. Then the bundles are pulled through two ceramic insulating plugs with an opening. These plugs separate a hot zone of the furnace, where the temperature of 550°C is maintained over the distance of 500 mm. The length of the furnace chamber is 1500 mm and the internal diameter is 80 mm. Then the bundles of the fibres are pulled through a choke mounted at the exit from the furnace, which is identical to the one at the entrance. Next, the bundles are pulled through the distance of 1100 mm to be cooled by gravity, after which they are directed together to an opening of a comb introducing them to an impregnation tank. The dimensions of the impregnation tank are as follows: the width is 200 mm, the length at the shortest point (at the bottom) is 220 mm, the length at the longest point (at the height of 85 mm from the bottom) is 270 mm and the depth is 85 mm. The column of the liquid resin is at least 50 mm from the bottom of the tank. The tank is equipped with a set of four guiding rollers made of stainless steel, each having the diameter of 22 mm. An element for removing an excess of the resin, on the other hand, comprises two sets of rollers, each containing two rollers having the diameter of 8 mm. They are located respectively 115 mm and 230 mm from the end of the tank. Each of the two sets of the rollers contains a lower roller and an upper roller. The centres of cross-sections of the roller are offset from each other by 8 mm horizontally and 20 mm vertically, with the lower roller being located closer to the tank and the upper roller being located closer to a nozzle forming a bar. A method of pulling the bundle of the carbon fibres through the impregnation tank is illustrated in Figure 2. As can be seen, the bundles of the fibres from the comb are pulled at the angle of 27° below the previous horizontal course of the bundles of the fibres and at the distance of 45 mm from the comb are supported on the upper surface of the steel guiding roller, and then at the angle of 59° to the horizontal course they are pulled downwards for the distance of 70 mm to the lower surface of the second steel roller, where they are immersed in the phenol-formaldehyde resin. The bundles of the fibres immersed in the resin are pulled horizontally between the second roller and the fourth roller for the distance of 140 mm, and after being pulled around the fourth roller they are turned at the angle of 79° upwards to the third roller spaced by 95 mm and contacted with the lower surface of the latter. The bundles, after being pulled around the third roller, are directed at the angle of 5° to two sets of double squeezing rollers, spaced from the third roller by 240 mm and 355 mm respectively, and they pass first under the lower roller and then over the upper roller. The bundles of the fibres, after being drained, are pulled through a steel nozzle having the internal diameter of 1.7 mm, the length of 10 mm and an entry surface in the shape of a concave cone with the truncation angle of 30°. The nozzle is located 140 mm from the last set of the squeezing rollers. The resin-impregnated bundles of the fibres, after being formed in the nozzle, are pulled through a heating zone having the length of 300 mm, in which they are heated with air having the temperature of 130°C, to degas and gel the resin. The bundles with the gelled resin are pulled through a heating chamber having the length of 1000 mm and the temperature of 200°C where the resin is cured. The finished material which is pulled out of the heating chamber, is pulled through the winch rollers and cut to an appropriate size.

### Example 2

Two bundles of carbon fibres, each of which has 24,000 fibres (830 TEX each), are unwound with the force of 40 N using a multi-roller winch mounted at the end of the entire pultrusion system so that the unwinding direction is perpendicular to the main axis of rotation of spools without causing their individual and mutual twisting. The unwound bundles are pulled through a centring element having the internal diameter of 30 mm, located 1,000 mm from the spools and positioned at the height at which the bundles of the carbon fibres are pulled through a tube furnace. Then the bundles are pulled through a quartz choke with a constriction, having the internal diameter of 12 mm, mounted at the entrance to the tube furnace and maintaining an inert atmosphere inside the furnace. Nitrogen is used as the inert gas supplied to the furnace through an independent inlet and discharged from the furnace through an independent outlet. A gas-collecting scrubber is mounted behind the outlet. Then the bundles are pulled through two ceramic insulating plugs with an opening. These plugs separate a hot zone of the furnace, where the temperature of 550°C is maintained over the distance of 500 mm. The length of the furnace chamber is 1500 mm and the internal diameter is 80 mm. Then the bundles of the fibres are pulled through a choke mounted at the exit from the furnace, which is identical to the one at the entrance. Next, the bundles are pulled through the distance of 800 mm to be cooled by gravity, after which they are directed together to an opening of a comb introducing them to an impregnation tank. The dimensions of the impregnation tank are as follows: the width is 200 mm, the length at the shortest point (at the bottom) is 220 mm, the length at the longest point (at the height of 85 mm from the bottom) is 270 mm and the depth is 85 mm. The column of the liquid resin is at least 50 mm from the bottom of the tank. The tank is equipped with a set of four guiding rollers made of stainless steel, each having the diameter of 22 mm. An element for removing an excess of the resin, on the other hand, comprises two sets of rollers, each containing two rollers having the diameter of 8 mm. They are located respectively 115 mm and 230 mm from the end of the tank. Each of the two sets of the rollers contains a lower roller and an upper roller. The centres of cross-sections of the roller are offset from each other by 8 mm horizontally and 20 mm vertically, with the lower roller being located closer to the tank and the upper roller being located closer to a nozzle forming a bar. A method of pulling the bundle of the carbon fibres through the impregnation tank is illustrated in Figure 2. As can be seen, the bundles of the fibres from the comb are pulled at the angle of 27° below the previous horizontal course of the bundles of the fibres and at the distance of 45 mm from the comb are supported on the upper surface of the steel guiding roller, and then at the angle of 59° to the horizontal course they are pulled downwards for the distance of 70 mm to the lower surface of the second steel roller, where they are immersed in the phenol-formaldehyde resin. The bundles of the fibres immersed in the resin are pulled horizontally between the second roller and the fourth roller for the distance of 140 mm, and after being pulled around the fourth roller they are turned at the angle of 79° upwards to the third roller spaced by 95 mm and contacted with the lower surface of the latter. The bundles, after being pulled around the third roller, are directed at the angle of 5° to two sets of double squeezing rollers, spaced from the third roller by 240 mm and 355 mm respectively, and they pass first under the lower roller and then over the upper roller. The bundles of the fibres, after being drained, are pulled through a brazen nozzle having the internal diameter of 1.5 mm, the length of 10 mm and an entry surface in the shape of a concave cone with the truncation angle of 30°. The nozzle is located 140 mm from the last set of the squeezing rollers. The resin-impregnated bundles of the fibres, after being formed in the nozzle, are pulled through a heating zone having the length of 300 mm, in which they are heated with air having the temperature of 120°C, to degas and gel the resin. The bundles with the gelled resin are pulled through a heating chamber having the length of 1000 mm and the temperature of 200°C where the resin is cured. The finished material which is pulled out of the heating chamber, is pulled through the winch rollers and wound onto a spool having the diameter of 1000 mm.

### Example 3

Six bundles of carbon fibres, each of which has 24,000 fibres (830 TEX each), are unwound with the force of 100 N using a multi-roller winch mounted at the end of the entire pultrusion system so that the unwinding direction is perpendicular to the main axis of rotation of spools without causing their individual and mutual twisting. The unwound bundles are pulled through a centring element having the internal diameter of 30 mm, located 1,000 mm from the spools and positioned at the height at which the bundles of the carbon fibres are pulled through a tube furnace. Then the bundles are pulled through a quartz choke with a constriction, having the internal diameter of 20 mm, mounted at the entrance to the tube furnace and maintaining an inert atmosphere inside the furnace. Nitrogen is used as the inert gas supplied to the furnace through an independent inlet and discharged from the furnace through an independent outlet. A gas-collecting scrubber is mounted behind the outlet. Then the bundles are pulled through two ceramic insulating plugs with an opening. These plugs separate a hot zone of the furnace, where the temperature of 650°C is maintained over the distance of 500 mm. The length of the furnace chamber is 1500 mm and the internal diameter is 80 mm. Then the bundles of the fibres are pulled through a choke mounted at the exit from the furnace, which is identical to the one at the entrance. Next, the bundles are pulled through the distance of 1500 mm to be cooled by gravity, after which they are divided into two groups of three bundles, and each group is directed to a single opening of a comb introducing them to an impregnation tank. The dimensions of the impregnation tank are as follows: the width is 200 mm, the length at the shortest point (at the bottom) is 220 mm, the length at the longest point (at the height of 85 mm from the bottom) is 270 mm and the depth is 85 mm. The column of the liquid resin is at least 50 mm from the bottom of the tank. The tank is equipped with a set of four guiding rollers made of stainless steel, each having the diameter of 22 mm. An element for removing an excess of the resin, on the other hand, comprises two sets of rollers, each containing two rollers having the diameter of 8 mm. They are located respectively 115 mm and 230 mm from the end of the tank. Each of the two sets of the rollers contains a lower roller and an upper roller. The centres of cross-sections of the roller are offset from each other by 8 mm horizontally and 20 mm vertically, with the lower roller being located closer to the tank and the upper roller being located closer to a nozzle forming a bar. The bundles of the fibres from the comb are pulled at the angle of 27° below the previous horizontal course of the bundles of the fibres and at the distance of 45 mm from the comb are supported on the upper surface of the steel guiding roller, and then at the angle of 59° to the horizontal course they are pulled downwards for the distance of 70 mm to the lower surface of the second steel roller, where they are immersed in the phenol-formaldehyde resin. The bundles of the fibres immersed in the resin are pulled horizontally between the second roller and the fourth roller for the distance of 140 mm, and after being pulled around the fourth roller they are turned at the angle of 30° upwards to the third roller spaced by 120 mm and contacted with the lower surface of the latter. The bundles, after being pulled around the third roller, are directed at the angle of 5° to two sets of double squeezing rollers, spaced from the third roller by 275 mm and 390 mm respectively, and they pass first under the lower roller and then over the upper roller. The bundles of the fibres, after being drained, are pulled through a polytetrafluoroethylene (PTFE) nozzle having the internal diameter of 4 mm, the length of 10 mm and an entry surface in the shape of a concave cone with the truncation angle of 30°. The nozzle is located 140 mm from the last set of the squeezing rollers. The resin-impregnated bundles of the fibres, after being formed in the nozzle, are pulled through a heating zone having the length of 300 mm, in which they are heated with air having the temperature of 150°C, to degas and gel the resin. The bundles with the gelled resin are pulled through a heating chamber having the length of 1000 mm and the temperature of 220°C where the resin is cured. The finished material which is pulled out of the heating chamber, is pulled through the winch rollers and cut to an appropriate size.

The values given in the examples indicating the dimensions of the individual elements and the distances between them refer to the laboratory scale and can be suitably increased in the case of large-scale production. This can be done by a person skilled in the art based on the present description while maintaining the appropriate proportions and controlling the tension force of the bundle of the carbon fibres.

### List of Literature References

1. Pilato, L. Phenolic Resins: 100Years and Still Going Strong. Reactive and Functional Polymers 2013, 73 (2), 270-277. https://doi.org/10.1016/j.reactfunctpolym.2012.07.008.
*2.* EN 13706-1:2002 - Reinforced plastics composites - Specifications for pultruded profiles - Part 1: Designation. iTeh Standards. https://standards.iteh.ai/catalog/standards/cen/ab460e27-bfd2-4f52-8fc3-9d46b595dc8c/en-13706-1-2002 (accessed 2024-01-13).
3. Starr, T. Pultrusion for Engineers; Elsevier, 2000.
4. Baran, I. 1 - Introduction to Pultrusion. In Pultrusion (Second Edition); Baran, I., Ed.; Elsevier, 2023; pp 1-16. https://doi.org/10.1016/B978-0-32-391613-4.00002-1.
5. Song, X.; Jiang, Y.; Zhong, Y.; Wang, D.; Deng, Y. Evaluation of Radio Frequency-Assisted Enzymatic Extraction of Non-Anthocyanin Polyphenols from Akebia Trifoliata Flowers and Their Biological Activities Using UPLC-PDA-TOF-ESI-MS and Chemometrics. Foods 2022, 11 (21), 3410.
6. Daisy, N. K.; Leeper, D. L. Fast Curing Phenolic Resins and Bonding Methods Employing Same. US4758478A, July 19, 1988. https://patents.google.com/patent/US4758478A/en (accessed 2023-12-30).
7. Hashimoto, H. Thermosetting Properties of Microwave-Promoted Heating of Phenol-Formaldehyde Resin. SN Appl. Sci. 2020, 2 (4), 579.
8. Baran, I. 2 - Main Challenges during the Pultrusion Process. In Pultrusion (Second Edition); Baran, I., Ed.; Elsevier, 2023; pp 17-34. https://doi.org/10.1016/B978-0-32-391613-4.00003-3.
9. Baran, I. 6 - Resin Flow and Reinforcement Impregnation in Pultrusion. In Pultrusion (Second Edition); Baran, I., Ed.; Elsevier, 2023; pp 149-176. https://doi.org/10.1016/B978-0-32-391613-4.00007-0.
10. Nasonov, Y.; Safonov, A.; Gusev, S.; Akhatov, I. Effect of Additives on Cure Kinetics of Pultrusion Resins. Procedia Manufacturing 2020, 47, 920-924. https://doi.org/10.1016/j.promfg.2020.04.283.

## Claims

1. A method of manufacturing a composite bar consisting of carbon fibres and a resin matrix, wherein the method comprises pulling at least one bundle of the carbon fibres with a force in the range of 40 to 1200 N, during which at least one bundle of the carbon fibres is subjected to a treatment comprising the following steps:
(a) exposing to a temperature in the range of 400°C to 800°C in an inert gas atmosphere;
(b) cooling to a temperature in the range of 10°C to 50°C;
(c) impregnating with a thermosetting resin having a crosslinking temperature in the range of 120°C to 250°C and a viscosity in the range of 500 mPa·s to 3500 mPa·s;
(d) removing an excess of the resin;
(e) forming into the shape of the bar having a diameter in the range of 1 mm to 15 mm at an ambient temperature in the range of 10°C to 50°C;
(f) exposing to a temperature in the range of 100°C to 150°C by pulling at least one resin-impregnated bundle of the carbon fibres in the shape of the bar through a heating zone with air blowing or a heating chamber, each having a length in the range of 100 mm to 1000 mm; and
(g) exposing to a temperature in the range of 150°C to 250°C by pulling at least one resin-impregnated bundle of the carbon fibres in the shape of the bar through a heating zone with air blowing or a heating chamber, each having a length in the range of 1000 mm to 5000 mm.

2. The method of manufacturing a composite bar according to claim 1, **characterized in that** in the said method one bundle of the carbon fibres is used, or more bundles of the carbon fibres, preferably 2 to 20 bundles of the carbon fibres, are used, which are supplied from separate spools, one bundle of the carbon fibres having a linear density in the range of 400 to 40,000 TEX or more bundles of the carbon fibres having a total linear density in the range of 400 to 40,000 TEX, each bundle of the carbon fibres independently containing 6,000 to 24,000 carbon fibres.

3. The method of manufacturing a composite bar according to claim 1 or claim 2, **characterized in that** the pulling of at least one bundle of the carbon fibres is carried out using a winch placed after the last step, wherein the winch is selected from a roller winch, a belt winch or a crawler winch.

4. The method of manufacturing a composite bar according to any one of claims 1 to 3, **characterized in that** step (a) is carried out by pulling at least one bundle of the carbon fibres through a tunnel furnace for continuous operation, in which the temperature in the range of 400°C to 800°C is maintained over a section of a length in the range of 250 mm to 1000 mm.

5. The method of manufacturing a composite bar according to any one of claims 1 to 4, **characterized in that** step (b) is carried out in the air.

6. The method of manufacturing a composite bar according to any one of claims 1 to 5, **characterized in that** step (c) is carried out by pulling at least one bundle of the carbon fibres through an impregnation tank containing the thermosetting resin at a temperature in the range of 10°C to 40°C to form at least one resin-impregnated bundle of the carbon fibres, wherein the thermosetting resin is preferably selected from a group comprising a phenolic resin, a phenol-formaldehyde resin, a furfuryl resin and a mixture thereof.

7. The method of manufacturing a composite bar according to any one of claims 1 to 6, **characterized in that** step (d) is carried out by pulling at least one resin-impregnated bundle of the carbon fibres through a set of 2 to 6 rollers arranged non-linearly with respect to the rectilinear path of at least one bundle of the carbon fibres.

8. The method of manufacturing a composite bar according to any one of claims 1 to 7, **characterized in that** step (e) is carried out by pulling at least one resin-impregnated bundle of the carbon fibres through a nozzle having a tapered inner diameter, wherein the inner diameter of the nozzle at the entrance is in the range of 50 mm to 100 mm and at the exit is in the range of 1 mm to 15 mm, and a length of the nozzle is in the range of 10 mm to 100 mm.

9. A system for manufacturing a composite bar consisting of carbon fibres and a resin matrix, wherein the system comprises the following elements:
- a source (1) of at least one bundle of the carbon fibres;
- an element (2) for centring at least one bundle of the carbon fibres;
- a tunnel furnace (3) for continuous operation, adapted to operate at a temperature in the range of 400°C to 800°C and equipped with an inlet and an outlet for an inert gas;
- a cooling zone (4);
- an element (5) for impregnating at least one bundle of the carbon fibres with a resin;
- an element (6) for removing an excess of the resin from at least one resin-impregnated bundle of the carbon fibres;
- an element (7) for forming at least one bundle of the carbon fibres into the shape of the bar;
- a heating zone (8) having a temperature in the range of 100°C to 150°C, which is a heating zone with air blowing or a heating chamber, the lengths of which are in the range of 100 mm to 1000 mm;
- a heating zone (9) having a temperature in the range of 150°C to 250°C, which is a heating zone with air blowing or a heating chamber, the lengths of which are in the range of 1000 mm to 5000 mm; and
- a winch (10).

10. The system for manufacturing a composite bar according to claim 9, **characterized in that** the source (1) of at least one bundle of the carbon fibres is at least one spool of the carbon fibres, preferably 2 to 20 spools of the carbon fibres.

11. The system for manufacturing a composite bar according to claim 9 or claim 10, **characterized in that** the tunnel furnace (3) for continuous operation has an internal diameter in the range of 20 mm to 200 mm and a length in the range of 500 mm to 5000 mm, wherein the temperature in the range of 400°C to 800°C occurs over a section of the furnace in the range of 250 mm to 1000 mm.

12. The system for manufacturing a composite bar according to any one of claims 9 to 11, **characterized in that** the cooling zone (4) is a section having a length in the range of 200 mm to 1500 mm located in the air.

13. The system for manufacturing a composite bar according to any one of claims 9 to 12, **characterized in that** the element (5) for impregnating at least one bundle of the carbon fibres with the resin comprises a set of at least two rollers for guiding at least one bundle of the carbon fibres, wherein the rollers have diameters in the range of 10 mm to 60 mm and are arranged non-linearly in relation to the shortest rectilinear path of at least one bundle of the carbon fibres from the source to the winch, preferably the element (5) is an impregnation tank having a length in the range of 100 mm to 500 mm, a width in the range of 200 mm to 1000 mm and a depth in the range of 50 mm to 400 mm.

14. The system for manufacturing a composite bar according to any one of claims 9 to 13, **characterized in that** the element (6) for removing the excess of the resin comprises a set of 2 to 6 rollers having diameters in the range of 2 mm to 60 mm, wherein the rollers are arranged non-linearly with respect to the shortest rectilinear path of at least one bundle of the carbon fibres from the source to the winch.

15. The system for manufacturing a composite bar according to any one of claims 9 to 14, **characterized in that** an arrangement of the rollers in the element (5) for impregnating at least one bundle of the carbon fibres with the resin and the rollers in the element (6) for removing the excess of the resin is such that the generated resistance gives a tensile force applied to at least one bundle of the carbon fibres in the range of 40 N to 1200 N.

16. The system for manufacturing a composite bar according to any one of claims 9 to 15, **characterized in that** the element (7) for forming at least one bundle of the carbon fibres into the shape of the bar is a nozzle having a tapered inner diameter, wherein the inner diameter of the nozzle at the entrance is in the range of 50 mm to 100 mm and at the exit is in the range of 1 mm to 15 mm, and a length of the nozzle is in the range of 10 mm to 100 mm.

## Patentansprüche

1. Verfahren zur Herstellung eines Verbundstabs aus Kohlenstofffasern und einer Harzmatrix, wobei das Verfahren das Ziehen von mindestens einem Kohlenstofffaserbündel mit einer Kraft zwischen 40 und 1200 N umfasst, wobei mindestens ein Kohlenstofffaserbündel einer Behandlung unterzogen wird, die nacheinander folgende Schritte umfasst:
a) Einwirkung einer Temperatur im Bereich von 400 °C bis 800 °C in einer Inertgasatmosphäre;
b) Abkühlung auf eine Temperatur im Bereich von 10 °C bis 50 °C;
c) Imprägnierung mit einem thermisch härtbaren Harz mit einer Vernetzungstemperatur im Bereich von 120 °C bis 250 °C und einer Viskosität im Bereich von 500 mPa·s bis 3500 mPa·s;
d) Entfernen des überschüssigen Harzes;
e) Formen zu einem Stab mit einem Durchmesser im Bereich von 1 mm bis 15 mm bei einer Umgebungstemperatur im Bereich von 10 °C bis 50 °C;
f) Einwirkung einer Temperatur im Bereich von 100 °C bis 150 °C durch Ziehen von mindestens einem mit Harz imprägnierten Kohlenstofffaserbündel in Form eines Stabs durch eine mit Luft durchströmte Heizzone oder eine Heizkammer, die jeweils eine Länge von 100 mm bis 1000 mm aufweisen; und
g) Einwirkung einer Temperatur im Bereich von 150 °C bis 250 °C durch Ziehen von mindestens einem mit Harz imprägnierten Kohlenstofffaserbündel in Form eines Stabs durch eine mit Luft durchströmte Heizzone oder eine Heizkammer, die jeweils eine Länge von 1000 mm bis 5000 mm aufweisen.

2. Verfahren zur Herstellung eines Verbundstabs nach Anspruch 1, **dadurch gekennzeichnet, dass** bei diesem Verfahren ein einzelnes Kohlenstofffaserbündel mit einer in Tex ausgedrückten linearen Dichte im Bereich von 400 bis 40 000 oder mehrere Kohlenstofffaserbündel mit einer in Tex ausgedrückten Gesamtlineardichte im Bereich von 400 bis 40 000 verwendet werden, vorzugsweise werden 2 bis 20 Kohlenstofffaserbündel verwendet, die von separaten Spulen zugeführt werden, wobei jedes der Kohlenstofffaserbündel unabhängig voneinander 6000 bis 24 000 Kohlenstofffasern enthält.

3. Verfahren zur Herstellung eines Verbundstabs nach Anspruch 1 oder 2, **dadurch gekennzeichnet, dass** das Ziehen von mindestens einem Kohlenstofffaserbündel mittels einer der letzten Stufe nachgeschalteten Ziehvorrichtung erfolgt, wobei eine aus einer Rollen-, Band- oder Raupenziehvorrichtung ausgewählte Ziehvorrichtung verwendet wird.

4. Verfahren zur Herstellung eines Verbundstabs nach einem der Ansprüche 1 bis 3, **dadurch gekennzeichnet, dass** der Schritt a) durch Ziehen von mindestens einem Kohlenstofffaserbündel durch einen Tunnelofen für den kontinuierlichen Betrieb durchgeführt wird, in dem die Temperatur im Bereich von 400 °C bis 800 °C auf einem Abschnitt mit einer Länge von 250 mm bis 1000 mm gehalten wird.

5. Verfahren zur Herstellung eines Verbundstabs nach einem der Ansprüche 1 bis 4, **dadurch gekennzeichnet, dass** der Schritt b) an der Luft durchgeführt wird.

6. Verfahren zur Herstellung eines Verbundstabs nach einem der Ansprüche 1 bis 5, **dadurch gekennzeichnet, dass** der Schritt c) durch Ziehen von mindestens einem Kohlenstofffaserbündel durch eine Imprägnierwanne durchgeführt wird, die ein Harz mit einer Temperatur im Bereich von 10 °C bis 40 °C enthält, wobei mindestens ein mit Harz imprägniertes Kohlenstofffaserbündel entsteht, wobei bevorzugt als thermisch härtbares Harz ein Harz verwendet wird, das aus der Gruppe bestehend aus Phenolharz, Phenol-Formaldehyd-Harz, Furfurylharz und deren Mischung ausgewählt ist.

7. Verfahren zur Herstellung eines Verbundstabs nach einem der Ansprüche 1 bis 6, **dadurch gekennzeichnet, dass** der Schritt d) durch Ziehen von mindestens einem mit Harz imprägnierten Kohlenstofffaserbündel durch eine Anordnung von 2 bis 6 Rollen durchgeführt wird, die nicht linear zur geradlinigen Strecke mindestens eines Kohlenstofffaserbündels angeordnet sind.

8. Verfahren zur Herstellung eines Verbundstabs nach einem der Ansprüche 1 bis 7, **dadurch gekennzeichnet, dass** der Schritt e) durch Ziehen von mindestens einem mit Harz imprägnierten Kohlenstofffaserbündel durch eine Düse mit einem sich verjüngenden Innendurchmesser durchgeführt wird, wobei der Innendurchmesser der Düse am Einlass im Bereich von 50 mm bis 100 mm und am Auslass im Bereich von 1 mm bis 15 mm liegt und die Länge der Düse im Bereich von 10 mm bis 100 mm liegt.

9. Anlage zur Herstellung eines Verbundstabs, bestehend aus Kohlenstofffasern und einer Harzmatrix, wobei diese Anlage nacheinander folgende Elemente umfasst:
- eine Quelle (1) von mindestens einem Kohlenstofffaserbündel;
- ein Element (2) zum Zentrieren von mindestens einem Kohlenstofffaserbündel;
- einen Tunnelofen (3) für den kontinuierlichen Betrieb, der für den Betrieb bei Temperaturen im Bereich von 400 °C bis 800 °C ausgelegt und mit einem Einlass und einem Auslass für Inertgas ausgestattet ist;
- eine Kühlzone (4);
- ein Element (5) zur Imprägnierung von mindestens einem Kohlenstofffaserbündel mit Harz;
- ein Element (6) zum Entfernen von überschüssigem Harz aus mindestens einem mit Harz imprägnierten Kohlenstofffaserbündel;
- ein Element (7) zum Formen von mindestens einem Kohlenstofffaserbündel zu einem Stab;
- eine Heizzone (8) mit einer Temperatur im Bereich von 100 °C bis 150 °C, bei der es sich um eine mit Luft durchströmte Zone oder eine Heizkammer handelt, deren Länge im Bereich von 100 mm bis 1000 mm liegt;
- eine Heizzone (9) mit einer Temperatur im Bereich von 150 °C bis 250 °C, bei der es sich um eine mit Luft durchströmte Zone oder eine Heizkammer handelt, deren Länge im Bereich von 1000 mm bis 5000 mm liegt;
- eine Ziehvorrichtung (10),

10. Anlage zur Herstellung eines Verbundstabs nach Anspruch 9, **dadurch gekennzeichnet, dass** es sich bei der Quelle (1) für mindestens ein Kohlenstofffaserbündel um mindestens eine Kohlenstofffaserspule handelt, vorzugsweise um 2 bis 20 Kohlenstofffaserspulen.

11. Anlage zur Herstellung eines Verbundstabs nach Anspruch 9 oder 10, **dadurch gekennzeichnet, dass** der Tunnelofen (3) für den kontinuierlichen Betrieb einen Innendurchmesser im Bereich von 20 mm bis 200 mm und eine Länge im Bereich von 500 mm bis 5000 mm aufweist, wobei die Temperatur im Bereich von 400 °C bis 800 °C in einem Ofenabschnitt im Bereich von 250 mm bis 1000 mm herrscht.

12. Anlage zur Herstellung eines Verbundstabs nach einem der Ansprüche 9 bis 11, **dadurch gekennzeichnet, dass** es sich bei der Kühlzone (4) um einen Abschnitt mit einer Länge im Bereich von 200 mm bis 1500 mm handelt, der sich an der Luft befindet.

13. Anlage zur Herstellung eines Verbundstabs nach einem der Ansprüche 9 bis 12, **dadurch gekennzeichnet, dass** das Element (5) zur Imprägnierung von mindestens einem Kohlenstofffaserbündel mit Harz eine Anordnung aus mindestens zwei Rollen zur Führung von mindestens einem Kohlenstofffaserbündel umfasst, wobei die Rollen Durchmesser im Bereich von 10 mm bis 60 mm aufweisen und nicht linear zur kürzesten geradlinigen Strecke mindestens eines Kohlenstofffaserbündels von der Quelle bis zur Ziehvorrichtung angeordnet sind; vorzugsweise handelt es sich bei dem Element (5) um eine Imprägnierwanne mit einer Länge im Bereich von 100 mm bis 500 mm, einer Breite im Bereich von 200 mm bis 1000 mm und einer Tiefe im Bereich von 50 mm bis 400 mm.

14. Anlage zur Herstellung eines Verbundstabs nach einem der Ansprüche 9 bis 13, **dadurch gekennzeichnet, dass** das Element (6) zum Entfernen von überschüssigem Harz eine Anordnung von 2 bis 6 Rollen mit Durchmessern im Bereich von 2 mm bis 60 mm umfasst, die nicht linear zur kürzesten geradlinigen Strecke mindestens eines Kohlenstofffaserbündels von der Quelle bis zur Ziehvorrichtung angeordnet sind.

15. Anlage zur Herstellung eines Verbundstabs nach einem der Ansprüche 9 bis 14, **dadurch gekennzeichnet, dass** die Rollenanordnung im Element (5) zur Imprägnierung von mindestens einem Kohlenstofffaserbündel mit Harz und die Rollenanordnung im Element (6) zum Entfernen von überschüssigem Harz so ausgelegt sind, dass der erzeugte Widerstand eine Ziehkraft für mindestens ein Kohlenstofffaserbündel im Bereich von 40 N bis 1200 N ergibt.

16. Anlage zur Herstellung eines Verbundstabs nach einem der Ansprüche 9 bis 15, **dadurch gekennzeichnet, dass** es sich bei dem Element (7) zum Formen von mindestens einem Kohlenstofffaserbündel zu einem Stab um eine Düse mit einem sich verjüngenden Innendurchmesser handelt, wobei der Innendurchmesser der Düse am Einlass im Bereich von 50 mm bis 100 mm und am Auslass im Bereich von 1 mm bis 15 mm liegt und die Länge der Düse im Bereich von 10 mm bis 100 mm liegt.

## Revendications

1. Procédé de fabrication d'une barre composite constituée de fibres de carbone et d'une matrice en résine, le procédé comprenant le tirage d'au moins un faisceau de fibres de carbone avec une force dans la plage de 40 à 1 200 N, pendant lequel au moins un faisceau de fibres de carbone est soumis à un traitement comprenant successivement les étapes suivantes :
a) l'exposition à une température dans la plage de 400 °C à 800 °C dans une atmosphère de gaz inerte ;
b) le refroidissement à une température dans la plage de 10 °C à 50 °C ;
c) l'imprégnation avec une résine thermodurcissable ayant une température de réticulation dans la plage de 120 °C à 250 °C et une viscosité dans la plage de 500 mPa·s à 3 500 mPa·s ;
d) l'élimination de l'excès de résine ;
e) le façonnage à la forme de la barre ayant un diamètre dans la plage de 1 mm à 15 mm à une température ambiante dans la plage de 10 °C à 50 °C ;
f) l'exposition à une température dans la plage de 100 °C à 150 °C par tirage d'au moins un faisceau de fibres de carbone imprégné de résine sous la forme de la barre à travers une zone de chauffage à circulation d'air forcée ou une chambre de chauffage, chacune ayant une longueur dans la plage de 100 mm à 1 000 mm ; et
g) l'exposition à une température dans la plage de 150 °C à 250 °C par tirage d'au moins un faisceau de fibres de carbone imprégné de résine sous la forme de la barre à travers une zone de chauffage à circulation d'air forcée ou une chambre de chauffage, chacune ayant une longueur dans la plage de 1 000 mm à 5 000 mm.

2. Procédé de fabrication d'une barre composite selon la revendication 1, **caractérisé en ce que**, dans ledit procédé, on utilise un seul faisceau de fibres de carbone, ou plusieurs faisceaux de fibres de carbone, de préférence de 2 à 20 faisceaux de fibres de carbone, qui sont alimentés à partir de bobines distinctes, un faisceau de fibres de carbone ayant une masse linéique dans la plage de 400 à 40 000 tex, ou plusieurs faisceaux de fibres de carbone ayant une masse linéique totale dans la plage de 400 à 40 000 tex, chaque faisceau de fibres de carbone contenant indépendamment de 6 000 à 24 000 fibres de carbone.

3. Procédé de fabrication d'une barre composite selon la revendication 1 ou 2, **caractérisé en ce que** le tirage d'au moins un faisceau de fibres de carbone est réalisé à l'aide d'un treuil positionné après la dernière étape, le treuil étant choisi parmi un treuil à rouleaux, un treuil à courroie ou un treuil à chenilles.

4. Procédé de fabrication d'une barre composite selon l'une quelconque des revendications 1 à 3, **caractérisé en ce que** l'étape a) est réalisée par tirage d'au moins un faisceau de fibres de carbone à travers un four-tunnel pour fonctionnement continu, dans lequel la température dans la plage de 400 °C à 800 °C est maintenue sur une section d'une longueur dans la plage de 250 mm à 1 000 mm.

5. Procédé de fabrication d'une barre composite selon l'une quelconque des revendications 1 à 4, **caractérisé en ce que** l'étape b) est réalisée dans l'air.

6. Procédé de fabrication d'une barre composite selon l'une quelconque des revendications 1 à 5, **caractérisé en ce que** l'étape c) est réalisée par tirage d'au moins un faisceau de fibres de carbone à travers une cuve d'imprégnation contenant la résine thermodurcissable à une température dans la plage de 10 °C à 40 °C pour former au moins un faisceau de fibres de carbone imprégné de résine, dans lequel la résine thermodurcissable est de préférence choisie dans un groupe comprenant une résine phénolique, une résine phénol-formaldéhyde, une résine furfurylique et un mélange de celles-ci.

7. Procédé de fabrication d'une barre composite selon l'une quelconque des revendications 1 à 6, **caractérisé en ce que** l'étape d) est réalisée par tirage d'au moins un faisceau de fibres de carbone imprégné de résine à travers un ensemble de 2 à 6 rouleaux disposés de façon non linéaire par rapport au chemin rectiligne d'au moins un faisceau de fibres de carbone.

8. Procédé de fabrication d'une barre composite selon l'une quelconque des revendications 1 à 7, **caractérisé en ce que** l'étape e) est réalisée par tirage d'au moins un faisceau de fibres de carbone imprégné de résine à travers une tuyère ayant un diamètre interne conique, dans lequel le diamètre interne de la tuyère à l'entrée est dans la plage de 50 mm à 100 mm, et à la sortie est dans la plage de 1 mm à 15 mm, et la longueur de la tuyère est dans la plage de 10 mm à 100 mm.

9. Système pour la fabrication d'une barre composite constituée de fibres de carbone et d'une matrice en résine, le système comprenant les éléments suivants :
- une source (1) d'au moins un faisceau de fibres de carbone ;
- un élément (2) de centrage d'au moins un faisceau de fibres de carbone ;
- un four-tunnel pour fonctionnement continu (3), adapté pour fonctionner à une température dans la plage de 400 °C à 800 °C et équipé d'une entrée et d'une sortie pour un gaz inerte ;
- une zone de refroidissement (4) ;
- un élément (5) pour l'imprégnation d'au moins un faisceau de fibres de carbone avec une résine ;
- un élément (6) pour l'élimination de l'excès de résine d'au moins un pistolet ou faisceau de fibres de carbone imprégné de résine ;
- un élément (7) pour le façonnage d'au moins un faisceau de fibres de carbone en forme de barre ;
- une zone de chauffage (8) ayant une température dans la plage de 100 °C à 150 °C, qui est une zone de chauffage à circulation d'air forcée ou une chambre de chauffage, dont les longueurs sont dans la plage de 100 mm à 1 000 mm ;
- une zone de chauffage (9) ayant une température dans la plage de 150 °C à 250 °C, qui est une zone de chauffage à circulation d'air forcée ou une chambre de chauffage, dont les longueurs sont dans la plage de 1 000 mm to 5 000 mm ; et
- un treuil (10).

10. Système pour la fabrication d'une barre composite selon la revendication 9, **caractérisé en ce que** la source (1) d'au moins un faisceau de fibres de carbone est constituée d'au moins une bobine de fibres de carbone, de préférence de 2 à 20 bobines de fibres de carbone.

11. Système pour la fabrication d'une barre composite selon la revendication 9 ou 10, **caractérisé en ce que** le four-tunnel pour fonctionnement continu (3) a un diamètre interne dans la plage de 20 mm à 200 mm et une longueur dans la plage de 500 mm à 5 000 mm, dans lequel la température dans la plage de 400 °C à 800 °C est présente sur une section du four dans la plage de 250 mm à 1 000 mm.

12. Système pour la fabrication d'une barre composite selon l'une quelconque des revendications 9 à 11, **caractérisé en ce que** la zone de refroidissement (4) est une section ayant une longueur dans la plage de 200 mm à 1 500 mm située dans l'air.

13. Système pour la fabrication d'une barre composite selon l'une quelconque des revendications 9 à 12, **caractérisé en ce que** l'élément (5) pour l'imprégnation d'au moins un faisceau de fibres de carbone avec la résine comprend un ensemble d'au moins deux rouleaux pour guider au moins un faisceau de fibres de carbone, les rouleaux ayant des diamètres dans la plage de 10 mm à 60 mm et étant disposés de façon non linéaire par rapport au chemin rectiligne le plus court d'au menos un faisceau de fibres de carbone depuis la source jusqu'au treuil, de préférence l'élément (5) est une cuve d'imprégnation ayant une longueur dans la plage de 100 mm à 500 mm, une largeur dans la plage de 200 mm à 1 000 mm et une profondeur dans la plage de 50 mm à 400 mm.

14. Système pour la fabrication d'une barre composite selon l'une quelconque des revendications 9 à 13, **caractérisé en ce que** l'element (6) pour l'élimination de l'excès de résine comprend un ensemble de 2 à 6 rouleaux ayant des diamètres dans la plage de 2 mm à 60 mm, les rouleaux étant disposés de façon non linéaire par rapport au chemin rectiligne le plus court d'au moins un faisceau de fibres de carbone depuis la source jusqu'au treuil.

15. Système pour la fabrication d'une barre composite selon l'une quelconque des revendications 9 à 14, **caractérisé en ce que** la disposition des rouleaux dans l'élément (5) pour l'imprégnation d'au moins un faisceau de fibres de carbone avec la résine et des rouleaux dans l'élément (6) pour l'élimination de l'excès de résine est telle que la résistance générée applique une force de traction à au moins un faisceau de fibres de carbone dans la plage de 40 N à 1 200 N.

16. Système pour la fabrication d'une barre composite selon l'une quelconque des revendications 9 à 15, **caractérisé en ce que** l'élément (7) pour le façonnage d'au moins un faisceau de fibres de carbone en forme de barre est une tuyère ayant un diamètre interne conique, dans lequel le diamètre interne de la tuyère à l'entrée est dans la plage de 50 mm à 100 mm, et à la sortie est dans la plage de 1 mm à 15 mm, et la longueur de la tuyère est dans la plage de 10 mm à 100 mm.
